# FASCICULE DE BREVET EUROPEEN

(11) **EP 0 787 422 B1**
(45) Date de publication et mention de la délivrance du brevet: **29.08.2001**
(21) Numéro de dépôt: 97440007.9
(22) Date de dépôt: 23.01.1997
(51) Int. Cl.: A01D 34/66

(54) **Faucheuse**
Mähmaschine
Mower

(30) Priorité: 31.01.1996 FR 9601331
(43) Date de publication de la demande: 06.08.1997
(73) Titulaire: KUHN S.A., 67700 Saverne (FR)
(72) Inventeur: Wolff, Michel, Waltenheim sur Zorn, 67670 Mommenheim (FR)

(56) Documents cités:
- EP-A- 0 579 564
- FR-A- 2 212 995
- FR-A- 2 426 396
- FR-A- 2 687 039

## Description

La présente invention se rapporte à une faucheuse comportant
- un mécanisme de coupe s'étendant, en position de travail, transversalement à la direction d'avance au travail ;
- une structure d'attelage destinée à être liée au dispositif d'attelage d'un véhicule moteur ;
- une poutre porteuse articulée d'une part à la structure d'attelage au moyen d'une première articulation et d'autre part au mécanisme de coupe au moyen d'une deuxième articulation ;
- un dispositif d'allégement comportant :
   - un élément élastique destiné à alléger le mécanisme de coupe en position de travail, et
   - un dispositif de commande comportant
      * un corps lié à la structure d'attelage au moyen d'une articulation ;
      * un tirant lié d'une part à l'une des extrémités dudit élément élastique et coulissant d'autre part dans ledit corps ;
      * un élément d'arrêt destiné à limiter, dans au moins un sens, le coulissement du tirant par rapport au corps ;
- un organe de dépose destiné, dans la position de dépose, à être lié à la poutre porteuse au moyen dudit élément d'arrêt.

Une telle faucheuse est connue par le document FR-A-2 687 039.

Cette faucheuse connue comporte :
- un mécanisme de coupe qui s'étend, en position de travail, transversalement à la direction d'avance au travail ;
- une structure d'attelage destinée à être liée au dispositif d'attelage d'un véhicule moteur ;
- une poutre porteuse qui est articulée d'une part à la structure d'attelage au moyen d'une première articulation d'axe longitudinal au moins sensiblement parallèle à la direction d'avance au travail et d'autre part au mécanisme de coupe au moyen d'une deuxième articulation d'axe longitudinal également au moins sensiblement parallèle à la direction d'avance au travail ;
- un dispositif d'allégement comportant un élément élastique destiné à alléger le mécanisme de coupe en position de travail et un dispositif de commande ;
   et
- une béquille.

Le dispositif de commande comporte un tirant lié d'une part à l'une des extrémités de l'élément élastique et coulissant d'autre part dans un corps lié à la structure d'attelage.

En position de travail le coulissement du tirant est limité en direction de l'élément élastique au moyen d'une broche traversant transversalement ledit tirant et venant buter contre le corps ce qui permet de tendre l'élément élastique pour alléger le mécanisme de coupe.

En position de travail la béquille est liée à la structure d'attelage au moyen de deux plots de maintient fixés sur cette dernière sur lesquels vient s'accrocher ladite béquille au moyen de deux trous prévus dans celle-ci.

On remarquera que la béquille est liée à la broche au moyen d'un câble, afin de ne pas la dissocier de celle-ci.

Pour amener la faucheuse de la position de travail dans la position de transport, l'opérateur fait pivoter le mécanisme de coupe vers le haut autour de la deuxième articulation au moyen d'un élément de manoeuvre.

A cet effet, l'élément élastique est détendu, le tirant est coulissé dans le corps de manière à dégager la broche de celui-ci et le mécanisme de coupe s'étend sensiblement verticalement.

Pour amener ensuite la faucheuse de cette position de transport dans la position de dépose, l'opérateur effectue les opérations suivantes :
- il retire la broche du tirant pour permettre à celui-ci de coulisser davantage dans le corps lié à la structure d'attelage lors d'un pivotement du mécanisme de coupe vers le bas autour de la deuxième articulation et annuler de ce fait l'action de l'élément élastique ;
- il délie d'autre part la béquille de la structure d'attelage pour la fixer à la poutre au moyen de ladite broche ;
- il fait pivoter le mécanisme de coupe vers le bas ;
- il repose la faucheuse au sol en abaissant le dispositif d'attelage du véhicule moteur ;
   et
- il délie ensuite la structure d'attelage dudit dispositif d'attelage.

La faucheuse est déposée.

Pour amener la faucheuse de la position de dépose dans la position de transport, l'opérateur lie la structure d'attelage au dispositif d'attelage du véhicule moteur, soulève la faucheuse, fait pivoter le mécanisme de coupe vers le haut, met la broche en place dans le tirant de manière à limiter la course de celui-ci dans le corps afin de tendre l'élément élastique allégeant le mécanisme de coupe lorsque ce dernier est à nouveau pivoté vers le bas dans une position de travail, et range la béquille sur la structure d'attelage.

Cette faucheuse présente cependant un certain nombre d'inconvénients, notamment en ce qui concerne la sécurité de l'opérateur et l'utilisation de ladite faucheuse.

En effet, comme décrit précédemment, la béquille est uniquement liée à la structure d'attelage au moyen de deux plots, ce qui laisse la possibilité à l'opérateur, lors de l'attelage de la faucheuse, de ranger la béquille dans la position de travail et de transport, sans s'assurer que la broche est bien en place dans le tirant.

Une négligence de cet ordre aurait pour conséquence un non-allégement du mécanisme de coupe lors du travail, ce qui se traduit par une détérioration et une usure prématurée de la faucheuse, notamment du mécanisme de coupe, risquant ainsi d'exposer l'utilisateur de la faucheuse à un certain danger, notamment lorsque le mécanisme de coupe comporte des éléments animés à des vitesses élevées.

Inversement, l'opérateur risque de ne pas ranger la béquille à l'emplacement prévu sur la structure d'attelage, ce qui présente également un certain nombre de risques pour l'utilisateur lors du travail. En effet, dans ce cas de figure la béquille est uniquement liée à la faucheuse au moyen du câble ce qui permet à ladite béquille un grand débattement pouvant engendrer des détériorations de la faucheuse et la rupture du câble entraînant inévitablement la perte de la béquille ce qui risque de compromettre le bon fonctionnement d'autres machines utilisées sur la même parcelle pour la suite des travaux comme par exemple des faneurs, andaineurs, presses, ensileuses, etc...

Comme décrit précédemment, la béquille est uniquement liée à la structure d'attelage au moyen des deux plots de maintient. On remarquera en sus que lors, du travail, notamment sur une parcelle difficile et accidentée, la béquille risque de se défaire des plots et alors être liée à la faucheuse uniquement par le câble qui risque dans ce cas de se rompre pour les mêmes raisons que celles exposées ci-avant et entraînant alors les mêmes conséquences.

Dans ce cas de figure, lorsque le câble n'assure plus sa fonction, l'opérateur risque alors, en vue de la dépose de la faucheuse, de mettre la béquille dans la position de dépose sans retirer la broche du tirant. En effet, dans la position de dépose, la partie supérieure de la béquille est destinée à s'étendre à l'intérieur d'un logement prévu sur la poutre porteuse lequel maintient ladite béquille latéralement et verticalement vers le haut sans la broche. La broche est normalement destinée à maintenir la béquille verticalement vers le bas pour éviter que celle-ci ne tombe lors du relevage de la faucheuse.

Lors du dételage de la faucheuse du véhicule moteur, l'élément élastique n'étant pas détendu, la structure d'attelage risque de pivoter violemment vers le haut autour de la première et de la deuxième articulation sous l'action de l'élément élastique, exposant ainsi l'opérateur à un danger certain.

Comme décrit précédemment, la béquille est normalement liée à la broche, au moyen du câble, mais l'ensemble formé par la béquille, le câble et la broche n'est pas solidaire de la faucheuse. En d'autres termes, cet ensemble béquille, câble, broche peut facilement être dissocié de la faucheuse et risque d'être égaré par l'opérateur. Dans ce cas de figure l'opérateur aura tendance à déposer la faucheuse au moyen d'éléments de fortune qui risquent de mal assurer la stabilité de ladite faucheuse et exposer ainsi l'opérateur à un danger certain.

On remarquera encore que la broche peut, notamment en position de transport, et en vue de la dépose de la faucheuse, être aisément retirée du tirant avec une seule main ce qui n'est pas favorable à la sécurité de l'opérateur. En effet, pendant cette opération l'opérateur risque de mettre l'autre main dans une zone qui pourrait devenir une zone de danger lorsque la broche est retirée du tirant. L'autre main pourrait encore actionner, de manière inopinée, un autre dispositif risquant également d'exposer l'opérateur à un danger.

Le but de la présente invention est, par conséquent, de remédier à ces inconvénients et de concevoir une faucheuse présentant une utilisation simple et fiable en sensibilisant au maximum l'opérateur sur les gestes à accomplir pour éviter qu'il ne fasse de mauvaises manoeuvres risquant de le mettre en danger et/ou de détériorer la faucheuse.

A cet effet, la faucheuse selon la présente invention est caractérisée en ce que, dans la position de travail, l'organe de dépose est lié au tirant au moyen dudit élément d'arrêt.

Une telle faucheuse est simple d'utilisation et permet d'une part de remédier aux inconvénients sus-cités de la faucheuse connue et permet d'autre part à l'opérateur de la déposer et de l'atteler au véhicule moteur avec une grande facilité avec une suite de gestes simples et logiques.

Selon une caractéristique supplémentaire de l'invention, aussi bien en position de travail qu'en position de dépose, l'organe de dépose est également lié à la poutre porteuse au moyen d'une liaison permettant de mieux lier l'organe de dépose à la poutre porteuse pour ne pas l'égarer.

Avantageusement, la poutre porteuse comporte, en vue de ladite liaison, un logement au travers duquel s'étend ledit organe de dépose.

Préférentiellement, le logement de la poutre porteuse est un orifice dans lequel l'organe de dépose peut coulisser pour être amené de la position de travail dans la position de dépose ou inversement permettant ainsi de faciliter l'utilisation et la manipulation dudit organe de dépose.

Avantageusement, pour éviter d'égarer l'organe de dépose lors du travail ou lors de sa manipulation, il est prévu, dans le voisinage de chaque extrémité de l'organe de dépose, une butée destinée à limiter le coulissement de l'organe de dépose dans l'orifice rendant ainsi ledit organe de dépose indissociable de la poutre porteuse.

Selon une autre caractéristique supplémentaire de l'invention, dans la position de travail, l'organe de dépose est suspendu au tirant du dispositif de commande au moyen de l'élément d'arrêt.

Selon une autre caractéristique supplémentaire de l'invention
- dans la position de travail, l'organe de dépose s'étend, en grande partie, au-dessus de la poutre porteuse ; et
- dans la position de dépose, l'organe de dépose s'étend en grande partie en dessous de la poutre porteuse.

Un tel agencement de l'organe de dépose permet notamment de le mettre en position de travail et en position de transport en un seul coup de main. En outre, dans l'hypothèse où l'élément d'arrêt serait, pour une raison quelconque, amené à ne plus suspendre l'organe de dépose au tirant en position de transport ou en position de travail, l'organe de dépose reste toujours lié à la poutre porteuse au moyen de la liaison décrite précédemment ce qui évite, dans ce cas de figure, d'égarer ledit organe de dépose et de compromettre le bon fonctionnement d'autres machines utilisées sur la même parcelle.

Selon une autre caractéristique supplémentaire de l'invention, en position de travail, l'élément d'arrêt s'étend d'une part au travers d'un premier logement prévu dans la partie supérieure de l'organe de dépose et d'autre part au travers d'un deuxième logement prévu dans le tirant.

Avantageusement, il est prévu un dispositif de verrouillage interdisant la sortie de l'élément d'arrêt du deuxième logement prévu dans le tirant lorsque la faucheuse est dans la position de travail.

Avantageusement, le dispositif de verrouillage implique l'élément d'arrêt et la partie supérieure de l'organe de dépose.

Une telle conception ne donne pas à l'opérateur la possibilité de ranger l'organe de dépose dans la position de travail et de transport sans mettre en place l'élément d'arrêt puisque l'organe de dépose et l'élément d'arrêt dépendent l'un de l'autre. Inversement, l'opérateur n'a pas non plus la possibilité de lier correctement l'élément d'arrêt au tirant sans l'organe de dépose puisque ce dernier est associé audit élément d'arrêt pour assurer le verrouillage dudit élément d'arrêt.

Selon une autre caractéristique de l'invention, pour défaire l'organe de dépose du tirant, il est nécessaire d'exercer une action simultanée sur ledit organe de dépose et sur l'élément d'arrêt. On évite ainsi que l'opérateur ou une tierce personne actionne le dispositif de verrouillage et défasse l'organe de dépose du tirant par mégarde. En outre, le fait d'exercer une action simultanée sur l'organe de dépose et sur l'élément d'arrêt occupe les deux mains de l'opérateur ce qui le rend plus attentif à son action et évite qu'il ne s'expose à un danger lors de la mise en position de travail ou de dépose de l'organe de dépose.

Selon une autre caractéristique de l'invention, en position de dépose l'élément d'arrêt s'étend d'une part au travers d'un troisième logement prévu dans la partie médiane de l'organe de dépose et d'autre part au travers d'un quatrième logement prévu dans la poutre porteuse. Pour mettre l'organe de dépose en position de dépose l'opérateur doit donc obligatoirement faire usage de l'élément d'arrêt pour lier l'organe de dépose à la poutre porteuse sans lequel l'organe de dépose ne pourrait supporter la poutre porteuse.

Selon une autre caractéristique de l'invention, l'élément d'arrêt est lié à l'organe de dépose au moyen d'un élément de liaison. Cet élément de liaison évite de dissocier l'élément d'arrêt de l'organe de dépose pour ne pas le perdre.

Avantageusement, l'élément de liaison est d'une longueur déterminée de sorte que :
- la longueur dudit élément de liaison est assez petite pour ne pas autoriser la mise en position de dépose de l'organe de dépose lorsque seul l'élément d'arrêt est lié au tirant ;
- la longueur dudit élément de liaison est assez grande pour que l'organe de dépose vient au moins dans le proche voisinage du sol lorsque seul l'élément d'arrêt est lié au tirant.

Une telle conception ne permet pas de déposer la faucheuse sans annuler l'action de l'allégement du mécanisme de coupe.

En outre, le fait que l'organe de dépose vient au moins dans le proche voisinage du sol, indique à l'opérateur, notamment lors du travail, qu'il a commis une erreur de manipulation puisque dans ce cas de figure, l'organe de dépose vient en interférence avec le produit préalablement fauché.

Selon une autre caractéristique supplémentaire de l'invention, l'élément d'arrêt est une broche.

D'autres objets et caractéristiques de l'invention ressortiront de la description ci-après avec référence aux dessins annexés qui représentent, à titre d'exemples non limitatifs, une forme de réalisation de la faucheuse selon l'invention.

Sur ces dessins
- la figure 1 représente, en position de travail, une faucheuse selon l'invention vue de l'arrière et liée à un véhicule moteur ;
- la figure 2 représente la faucheuse de la figure 1, vue de l'arrière avec le mécanisme de coupe dans sa position relevée de transport ;
- la figure 3 représente, en position déposée, la faucheuse des figures 1 et 2, vue de côté ;
- la figure 4 représente, en position de travail, l'organe de dépose lié au tirant au moyen de l'élément d'arrêt vu de l'arrière de la faucheuse représentée sur la figure 1, à une autre échelle ;
- la figure 5 représente une vue en coupe suivant le plan V-V défini sur la figure 4 ;
- la figure 6 représente l'organe de dépose lié à la poutre porteuse de la faucheuse représentée sur la figure 3, à une autre échelle, et sur laquelle ont été effectuées quelques coupes partielles ;
- la figure 7 représente une vue en coupe suivant le plan VII-VII défini sur la figure 6, à une autre échelle.

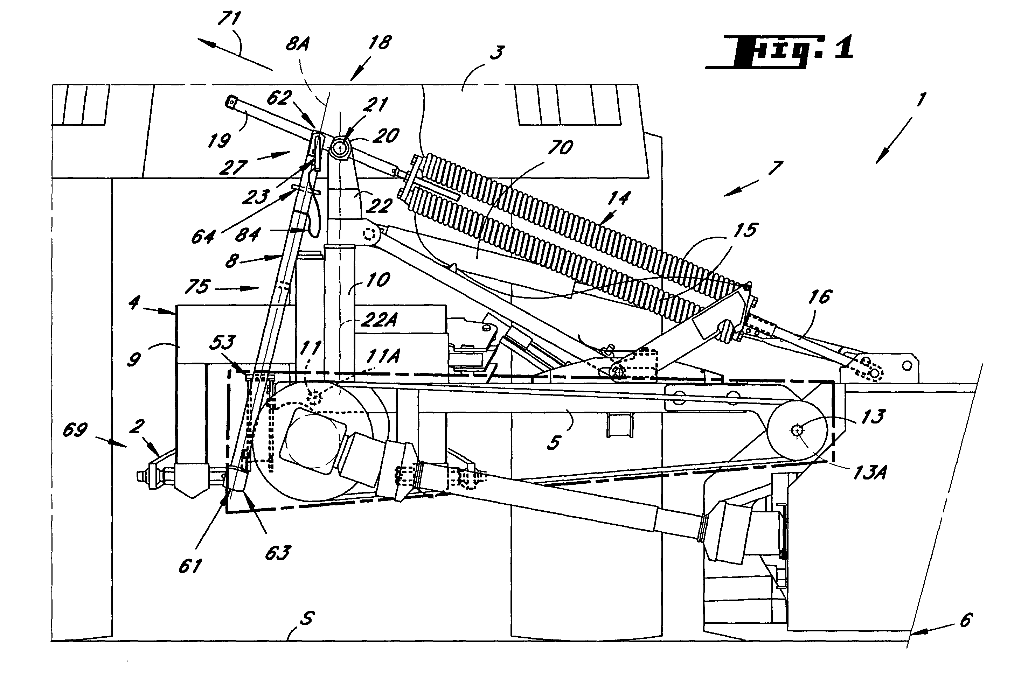

La faucheuse (1), telle que représentée sur les figures 1 à 7, est semblable à celle décrite par le document FR-A-2 687 039. Pour de plus amples détails, on se reportera, en cas de besoin, au texte dudit document.

La faucheuse (1) telle que représentée sur la figure 1 est liée au dispositif d'attelage (2) d'un véhicule moteur (3).

Cette faucheuse (1) se compose principalement d'une structure d'attelage (4) liée à une poutre porteuse (5), un mécanisme de coupe (6), un dispositif d'allégement (7) et un organe de dépose (8) d'axe longitudinal (8A) s'étendant dans la position de travail, en grande partie, au-dessus de la poutre porteuse (5).

La structure d'attelage (4) comporte un portique (9) au moyen duquel la faucheuse (1) est liée au véhicule moteur (3). Entre la poutre porteuse (5) et le portique (9) est implanté un bras de positionnement (10) faisant partie de la structure d'attelage (4) et servant à ramener la poutre porteuse (5) et le mécanisme de coupe (6) vers le plan médian du véhicule moteur (3) dans une position de transport (non représentée), afin d'en faciliter le transport. La poutre porteuse (5) est liée à l'une de ces extrémités, au bras de positionnement (10) au moyen d'une première articulation (11) cylindrique d'axe longitudinal (11A) s'étendant, en position de travail, suivant la direction d'avance au travail (12). A l'autre extrémité de la poutre porteuse (5) est lié le mécanisme de coupe (6) au moyen d'une deuxième articulation (13) cylindrique d'axe longitudinal (13A) s'étendant au moins sensiblement parallèlement à l'axe (11A).

Le dispositif d'allégement (7) comporte un élément élastique (14) destiné à alléger le mécanisme de coupe (6) lors du travail. Cet élément élastique (14) est, selon l'exemple représenté, composé de deux ressorts de traction (15) liés d'une part à une de leurs extrémités à un tirant inférieur (16) lui-même lié au mécanisme de coupe (6) et d'autre part à un dispositif de commande (18).

Le dispositif de commande (18) comporte un tirant (19) lié d'une part à l'autre extrémité des deux ressorts de traction (15) et coulissant d'autre part dans un corps (20) lié au bras de positionnement (10) de la structure d'attelage (4) au moyen d'une articulation cylindrique (21) d'axe longitudinal (21A) au moins sensiblement parallèle à l'axe longitudinal (11A) de la première articulation (11) et au moyen d'un tourillon (22) d'axe longitudinal (22A) au moins sensiblement vertical.

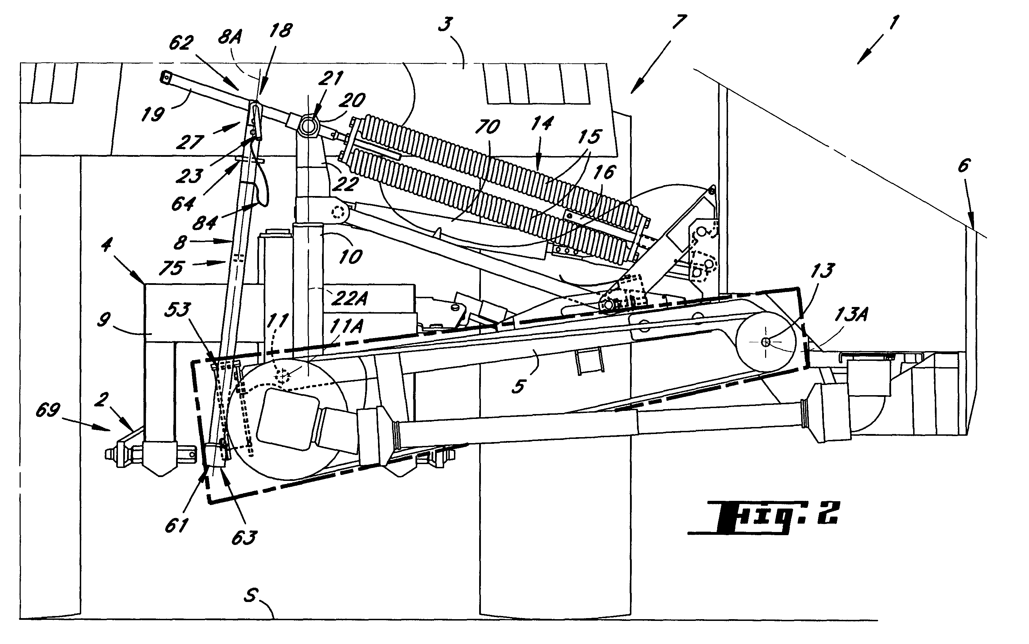

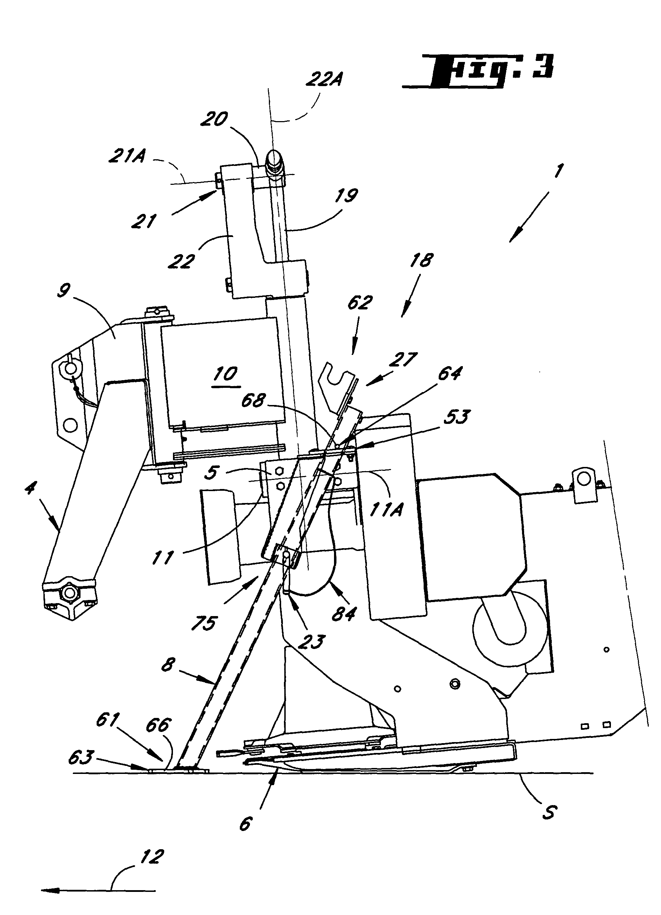

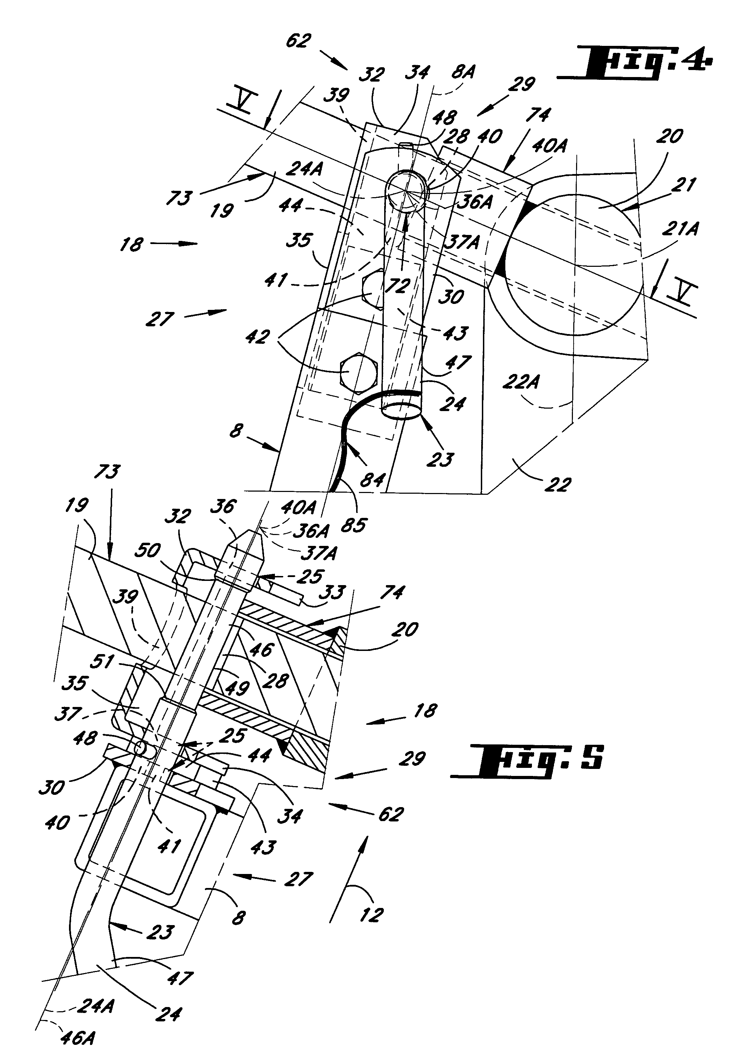

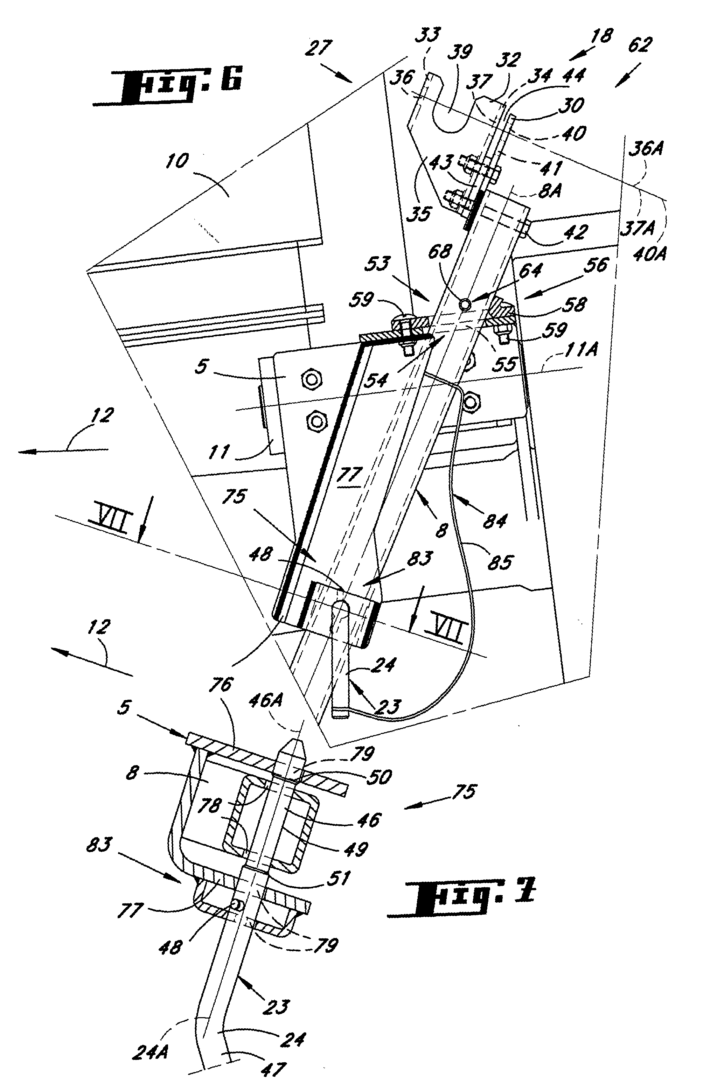

En position de travail, tel que représenté sur les figures 1, 4 et 5, le mécanisme de coupe (6) repose sur le sol (S) et s'étend transversalement à la direction d'avance au travail (12) et latéralement au véhicule moteur (3). Le coulissement du tirant (19) dans le corps (20) est limité dans le sens du mécanisme de coupe (6) de manière à tendre les ressorts de traction (15) pour alléger le mécanisme de coupe (6). A cet effet, il est prévu un élément d'arrêt (23) comportant une broche (24) de profil rond qui s'étend d'une part au travers d'un premier logement (25) prévu dans la partie supérieure (27) de l'organe de dépose (8) et d'autre part au travers d'un deuxième logement (28) prévu dans le tirant (19) tel que représenté sur les figures 4 et 5. Ainsi, dans cette position de travail, l'organe de dépose (8) est suspendu au tirant (19) au moyen de l'élément d'arrêt (23).
Il est en sus prévu un dispositif de verrouillage (29) interdisant la sortie de l'élément d'arrêt (23) du deuxième logement (28) prévu dans le tirant (19) lorsque la faucheuse (1) est dans la position de travail.

Ce dispositif de verrouillage (29) implique l'élément d'arrêt (23) et la partie supérieure (27) de l'organe de dépose (8). A cet effet, la partie supérieure (27) de l'organe de dépose (8) comporte d'une part une première pièce (30) s'étendant dans le prolongement de l'organe de dépose (8) latéralement à ce dernier et d'autre part une deuxième pièce (32) en forme de "U". Cette deuxième pièce (32) comporte deux parties latérales (33, 34) parallèles et une base (35). Les parties latérales (33, 34) comportent chacune un trou (36, 37) d'axes longitudinaux (36A, 37A) confondus faisant partie du logement (25). La broche (24) s'étend de part en part au travers des trous (36, 37). La base (35) quant à elle est traversée par le tirant (19) au moyen d'une entaille (39) effectuée dans ladite base (35).

Le logement (25) comporte également un trou (40), d'axe longitudinal (40A) confondu avec les axes longitudinaux (36A, 37A) des trous (36, 37) effectués dans la première pièce (30), la broche (24) s'étend également au travers du trou (40). La première pièce (30) est également dotée d'un trou oblong (41) débouchant radialement sur le trou (40). Ce trou oblong (41) est orienté suivant l'axe longitudinal (8A) de l'organe de dépose (8), et est comparable avec le trou (40) à un trou de serrure.

La première pièce (30) est soudée à l'organe de dépose (8) tandis que la deuxième pièce (32) est fixée à ladite première pièce (30) au moyen de deux boulons (42) et d'une cale (43). Cette cale (43) s'étend entre la première pièce (30) et la partie latérale (34) de la deuxième pièce (32) de manière à créer au-dessus de ladite cale (43) et entre les pièces (30 et 32) un espace (44). On remarquera également que la cale (43) est traversée de part en part par les boulons (42).

La broche (24) est composée d'une part d'une partie active (46) s'étendant, en position de travail, au moins sensiblement parallèlement à l'axe longitudinal (21A) de l'articulation cylindrique (21) et d'autre part d'une poignée (47) inclinée par rapport à ladite partie active (46).

La partie active (46) comporte un élément de verrouillage (48) s'étendant, tel que représenté sur les figures 4 et 5, radialement à ladite partie active (46) dans le sens inverse de la poignée (47). En position de travail l'élément de verrouillage (48) s'étend dans l'espace (44) et est dirigé verticalement vers le haut tandis que la poignée (47) s'étend vers le bas sous l'effet de son poids.

Dans cette position l'élément de verrouillage (48) est prisonnier entre la première (30) et la deuxième pièce (32) verrouillant ainsi la broche (24) dans la position de travail.

La partie active (46) de la broche (24) comporte en outre une partie d'appui (49) de diamètre plus petit que le reste de la broche (24) venant, en position de travail, en appui sur le corps (20) du portique (9).

A chaque extrémité de la partie d'appui (49) apparaît un épaulement (50, 51). En position de travail l'épaulement (50) s'étend entre le corps (20) du portique (9) et la partie latérale (33) de la deuxième pièce (32) tandis que l'épaulement (51) s'étend entre le corps (20) et la partie latérale (34).

On notera que dans la position de travail, l'organe de dépose (8) est lié au tirant (19) au moyen de la broche (24) de manière à permettre un mouvement relatif entre ledit organe de dépose (8) et ledit tirant (19).

A la lumière des différentes figures on voit que, aussi bien en position de travail qu'en position de dépose, l'organe de dépose (8) est également lié à la poutre porteuse (5) au moyen d'une liaison (53). A cet effet, on voit sur les figures 6 et 7 que la poutre porteuse (5) comporte un logement (54) au travers duquel s'étend ledit organe de dépose (8). Ce logement (54) est composé d'un orifice (55) prévu dans la poutre porteuse (5), dans lequel l'organe de dépose (8) peut coulisser pour être amené de la position de travail dans la position de dépose ou inversement.

La liaison (53) comporte en outre un dispositif de freinage (56) composé d'un élément élastique (58) fixé, au-dessus de l'orifice (55), sur la poutre porteuse (5) au moyen de boulons (59). L'élément élastique (58) s'étend, aux alentours de l'orifice (55), autour de l'organe de dépose (8) jusqu'à venir en contact avec ce dernier de manière à freiner l'organe de dépose (8) lors de sa manutention tout en assurant un coulissement.

On notera également qu'il est prévu, tel que représenté sur les figures 3, 6 et 7, dans le voisinage de chaque extrémité (61, 62) de l'organe de dépose (8), une butée (63, 64) destinée à limiter le coulissement de l'organe de dépose (8) dans l'orifice (55).

La butée (63) est composée d'un pied (66) fixé à l'extrémité (61) de l'organe de dépose (8). Ce pied (66) est destiné d'une part à reposer sur le sol (S) en position de dépose et d'autre part à interdire l'extraction vers le haut de l'organe de dépose (8) de l'orifice (55).

La butée (64) quant à elle est composée, selon l'exemple représenté, d'une goupille d'arrêt (68) située sous la partie supérieure (27) de l'organe de dépose (8).

Cette goupille d'arrêt (68) traverse transversalement de part en part l'organe de dépose (8) et s'étend de part et d'autre au-delà dudit organe de dépose (8) de manière à venir, dans la position de dépose, en butée sur l'élément élastique (58) du dispositif de freinage (56) afin d'interdire l'extraction vers le bas dudit organe de dépose (8) de l'orifice (55).

On remarquera en sus que, dans la position de travail, l'organe de dépose (8) s'étend, en grande partie, au-dessus de la poutre porteuse (5).

Pour mettre la faucheuse (1) de la position de travail dans la position de dépose, l'opérateur doit notamment amener l'organe de dépose (8) dans la position de dépose telle que représentée sur les figures 3, 6 et 7.

On remarquera que dans cette position de dépose l'organe de dépose (8) s'étend, en grande partie, en dessous de la poutre porteuse (5) et repose sur le sol au moyen du pied (66).

Pour ce faire, l'opérateur doit, dans un premier temps, retirer la broche (24) du premier et du deuxième logement (25, 28) de la partie supérieure (27) de l'organe de dépose (8) et du tirant (19) de manière à délier ledit organe de dépose (8) dudit tirant (19), ce qui va lui permettre, dans un deuxième temps, de coulisser ledit organe de dépose (8) vers le bas dans l'orifice (55) prévu dans la poutre porteuse (5) et de le lier à cette dernière au moyen de ladite broche (24).

L'opérateur peut uniquement retirer la broche (24) du premier et du deuxième logement (25, 28) lorsque les deux conditions suivantes sont respectées :
1. il faut d'une part que le mécanisme de coupe (6) soit en position de transport telle que représentée sur la figure 2, et
2. il faut d'autre part que l'opérateur exerce une action simultanée sur l'organe de dépose (8) et sur la broche (24).

La mise en position de transport du mécanisme de coupe (6) depuis sa position de travail, s'effectue dans les grandes lignes de la manière suivante :
- l'opérateur actionne dans un premier temps le dispositif d'attelage (2) du véhicule moteur (3) qui est également un relevage hydraulique (69), ce qui a pour effet de déplacer la faucheuse (1) vers le haut.
- Ensuite l'opérateur actionne à partir du véhicule moteur (3) un vérin de relevage (70) qui permet notamment de pivoter le mécanisme de coupe (6) dans une position au moins sensiblement verticale de transport (figure 2) autour de l'axe longitudinal (13A) de la deuxième articulation (13) cylindrique. A cet effet, les ressorts de traction (15) se détendent et font coulisser le tirant (19) dans le corps (20) dans le sens de la flèche (71) représenté sur la figure 1. La partie d'appui (49) de la partie active (46) de la broche (24) n'est plus en appui sur le corps (20) du portique (9), ladite broche (24) n'est donc plus soumise à des contraintes engendrées par les ressorts de traction (15) ce qui permet à l'opérateur de manipuler aisément la broche (24).

Dans cette position de transport l'organe de dépose (8) est suspendu au tirant (19) au moyen de la broche (24) ce qui a pour effet de faire reposer la partie d'appui (49) de la partie active (46) de ladite broche (24) au fond (72) du deuxième logement (28) sous l'effet du poids dudit organe de dépose (8).

L'action de l'opérateur sur la broche (24) consiste d'abord à tourner cette dernière dans le premier logement (25) de manière à amener l'élément de verrouillage (48) en face du trou oblong (41) pour ensuite pouvoir tirer sur la broche (24) en vue de l'extraire des logements (25, 28) en faisant passer ledit élément de verrouillage (48) au travers dudit trou oblong (41). La broche (24) va coulisser quelque peu dans le premier et le deuxième logement (25, 28) jusqu'à ce que l'épaulement (50) vient buter contre la surface extérieure (73) du tirant (19). Pour cela, l'opérateur doit également agir sur l'organe de dépose (8) pour permettre la suite des opérations.

L'action de l'opérateur sur l'organe de dépose (8) consiste à soulever et à guider quelque peu l'organe de dépose (8) de sorte que l'épaulement (50) ne bute plus contre le tirant (19) mais qu'il passe au travers du deuxième logement (28) afin de retirer la broche (24) du premier et du deuxième logement (25, 28).

Le fait de devoir agir sur l'organe de dépose (8) pour retirer la broche (24), oblige automatiquement l'opérateur à retenir ledit organe de dépose (8) lorsque celui-ci est délié du tirant, ce qui permet avantageusement d'éviter que l'opérateur ne soit surpris et blessé lors d'un éventuel débattement imprévu dudit organe de dépose (8).

Dans l'hypothèse où l'opérateur souhaite retirer la broche (24) des logements (25, 28), lorsque la faucheuse (1) est dans la position de travail, s'avère être une opération impossible, ce qui évite d'exposer l'opérateur à un danger certain et de détériorer la faucheuse (1).

En effet, lorsque la faucheuse (1) est dans la position de travail, les ressorts de traction (15) exercent une traction sur le tirant (19) ce qui a pour effet d'appliquer la partie d'appui (49) de la partie active (46) de la broche (24) sur le corps (20) du portique (9). Un tel effet des ressorts de traction (15) sur le tirant (19) et la broche (24) ne permet pas de retirer cette dernière du premier et du deuxième logement (25, 28). En effet, lors d'une action de l'opérateur sur la broche (24) en vue de l'extraction de celle-ci des logements (25, 28), l'épaulement (50) de ladite broche (24) vient buter sur la surface extérieure (74) du corps (20).

Comme décrit auparavant, pour amener l'organe de dépose (8) de la position de transport dans la position de dépose, l'opérateur coulisse, après avoir retiré la broche (24) des logements (25, 28), au moins sensiblement verticalement ledit organe de dépose (8) vers le bas dans l'orifice (55) de la poutre porteuse (5) jusqu'à ce que la goupille d'arrêt (68) bute sur l'élément élastique (58) du dispositif de freinage (56). Ensuite, il suffit à l'opérateur de basculer l'extrémité (61) de l'organe de dépose (8) dans la direction d'avance au travail (12) pour le lier aisément à la poutre porteuse (5) au moyen de la broche (24). Enfin, pour amener la faucheuse (1) de la position de transport dans la position de dépose, l'opérateur actionne le vérin de relevage (70) pour pivoter le mécanisme de coupe (6) dans une position au moins sensiblement horizontale autour de l'axe longitudinal (13A) de la deuxième articulation (13) cylindrique et abaisse la faucheuse (1) au moyen du relevage hydraulique (69) du véhicule moteur (3) pour la reposer au sol par l'intermédiaire du pied (66) de l'organe de dépose (8) et du mécanisme de coupe (6). Pour finir il ne reste plus qu'à défaire la faucheuse (1) du dispositif d'attelage (2) du véhicule moteur (3).

A cet effet, lors de la mise en place de l'organe de dépose (8) dans la position de dépose, la partie médiane (75) de l'organe de dépose (8) vient s'étendre entre deux parois latérales (76, 77) de la poutre porteuse (5) et la broche (24) s'étend d'une part au travers d'un troisième logement (78) prévu dans la partie médiane (75) dudit organe de dépose (8) et d'autre part au travers d'un quatrième logement (79) prévu dans la poutre porteuse (5) tel que représenté sur les figures 3, 6 et 7.

On remarquera que, dans la position de dépose, l'organe de dépose (8) est lié à la poutre porteuse (5) d'une part au moyen de la broche (24) de manière à permettre un mouvement relatif entre ledit organe de dépose (8) et ladite poutre porteuse (5) et d'autre part au moyen de la liaison (53).

Sous l'effet du poids de la structure d'attelage (4), l'organe de dépose (8) vient en appui sur un des côtés de l'orifice (55) du logement (54) de la poutre porteuse (5) et ledit organe de dépose (8) est fixé à la poutre porteuse (5). Là aussi est prévu un dispositif de verrouillage (83) interdisant la sortie de l'élément d'arrêt (23) des logements (78, 79) lorsque la faucheuse (1) est dans la position de dépose. Ce dispositif de verrouillage (83) est dans le principe pareil au dispositif de verrouillage (29).

L'opérateur peut uniquement retirer la broche (24) du troisième et du quatrième logement (78, 79) lorsque les conditions suivantes sont respectées :
- il faut d'une part que la faucheuse (1) soit soulevée au moyen du relevage hydraulique (69) du véhicule moteur (3) de sorte que l'organe de dépose (8) ne repose plus sur le sol (S) ; et
- il faut d'autre part que l'opérateur exerce une action simultanée sur l'organe de dépose (8) et sur la broche (24) pour les mêmes raisons que celles énumérées précédemment.

La mise en position de transport et la mise en position de travail de la faucheuse (1) depuis la position de dépose se fait de la manière inverse que celle décrite précédemment pour mettre la faucheuse (1) dans la position de transport et de dépose.

On notera encore que la broche (24) de l'élément d'arrêt (23) est liée à l'organe de dépose (8) au moyen d'un élément de liaison (84) qui est, selon cet exemple de réalisation représenté, un câble (85). Ce câble (85) est fixé à l'organe de dépose (8), et est d'une longueur déterminée de sorte que :
- la longueur dudit câble (85) est assez petite pour ne pas autoriser la mise en position de dépose de l'organe de dépose (8) lorsque seul la broche (24) est liée au tirant ;
- la longueur dudit câble (85) est assez grande pour que l'organe de dépose (8) vient au moins dans le proche voisinage du sol (S) lorsque seul la broche (24) est liée au tirant (19).

Finalement différentes modifications restent possibles dans le cadre de l'invention ci-décrite, notamment en ce qui concerne la constitution des divers éléments ou par substitution d'équivalents techniques.

## Revendications

1. Faucheuse comportant
- un mécanisme de coupe (6) s'étendant, en position de travail, transversalement à la direction d'avance au travail (12) ;
- une structure d'attelage (4) destinée à être liée au dispositif d'attelage (2) d'un véhicule moteur (3) ;
- une poutre porteuse (5) articulée d'une part à la structure d'attelage (4) au moyen d'une première articulation (11) et d'autre part au mécanisme de coupe (6) au moyen d'une deuxième articulation (13) ;
- un dispositif d'allégement (7) comportant :
• un élément élastique (14) destiné à alléger le mécanisme de coupe (6) en position de travail, et
• un dispositif de commande (18) comportant :
* un corps (20) lié à la structure d'attelage (4) au moyen d'une articulation (21) ;
* un tirant (19) lié d'une part à l'une des extrémités dudit élément élastique (14) et coulissant d'autre part dans ledit corps ;
* un élément d'arrêt (23) destiné à limiter, dans au moins un sens, le coulissement du tirant (19) par rapport au corps (20) ;
- un organe de dépose (8) destiné, dans la position de dépose, à être lié à la poutre porteuse (5) au moyen dudit élément d'arrêt (23) ;
***caractérisée en ce* que** dans la position de travail, l'organe de dépose (8) est lié au tirant (19) au moyen dudit élément d'arrêt (23).

2. Faucheuse selon la revendication 1, ***caractérisée en ce* que** aussi bien en position de travail qu'en position de dépose l'organe de dépose (8) est également lié à la poutre porteuse (5) au moyen d'une liaison (53).

3. Faucheuse selon la revendication 2, ***caractérisée en ce* que** la poutre porteuse (5) comporte, en vue de ladite liaison (53), un logement (54) au travers duquel s'étend ledit organe de dépose (8).

4. Faucheuse selon la revendication 3, ***caractérisée en ce* que** le logement (54) de la poutre porteuse (5) est un orifice (55) dans lequel l'organe de dépose (8) peut coulisser pour être amené de la position de travail dans la position de dépose ou inversement.

5. Faucheuse selon la revendication 4, ***caractérisée en ce* qu**'il est prévu, dans le voisinage de chaque extrémité (61, 62) de l'organe de dépose (8) une butée (63, 64) destinée à limiter le coulissement de l'organe de dépose (8) dans l'orifice (55).

6. Faucheuse selon l'une quelconque des revendications 1 à 5, ***caractérisée en ce* que**, dans la position de travail, l'organe de dépose (8) est suspendu au tirant (19) du dispositif de commande (18) au moyen de l'élément d'arrêt (23).

7. Faucheuse selon l'une quelconque des revendications 1 à 6, ***caractérisée en ce* que** :
- dans la position de travail, l'organe de dépose (8) s'étend, en grande partie, au-dessus de la poutre porteuse (5) ;
et
- dans la position de dépose, l'organe de dépose (8) s'étend, en grande partie, en dessous de la poutre porteuse (5).

8. Faucheuse selon l'une quelconque des revendications 1 à 7, ***caractérisée en ce* qu**'en position de travail l'élément d'arrêt (23) s'étend d'une part au travers d'un premier logement (25) prévu dans la partie supérieure (27) de l'organe de dépose (8) et d'autre part au travers d'un deuxième logement (28) prévu dans le tirant (19).

9. Faucheuse selon la revendication 8, ***caractérisée en ce* qu**'il est prévu un dispositif de verrouillage (29) interdisant la sortie de l'élément d'arrêt (23) du deuxième logement (28) prévu dans le tirant (19) lorsque la faucheuse est dans la position de travail.

10. Faucheuse selon la revendication 9, ***caractérisée en ce* que** le dispositif de verrouillage (29) implique l'élément d'arrêt (23) et la partie supérieure (27) de l'organe de dépose (8).

11. Faucheuse selon l'une quelconque des revendications 1 à 10, ***caractérisée en ce* que** pour défaire l'organe de dépose (8) du tirant (19) il est nécessaire d'exercer une action simultanée sur ledit organe de dépose (8) et sur l'élément d'arrêt (23).

12. Faucheuse selon l'une quelconque des revendications 1 à 11, ***caractérisée en ce* qu**'en position de dépose l'élément d'arrêt (23) s'étend d'une part au travers d'un troisième logement (78) prévu dans la partie médiane (75) de l'organe de dépose (8) et d'autre part au travers d'un quatrième logement (79) prévu dans la poutre porteuse (5).

13. Faucheuse selon l'une quelconque des revendications 1 à 12, ***caractérisée en ce* que** l'élément d'arrêt (23) est lié à l'organe de dépose (8) au moyen d'un élément de liaison (84).

14. Faucheuse selon la revendication 13, ***caractérisée en ce* que** l'élément de liaison (84) est d'une longueur déterminée de sorte que :
- la longueur dudit élément de liaison (84) est assez petite pour ne pas autoriser la mise en position de dépose de l'organe de dépose (8), lorsque seul l'élément d'arrêt (23) est lié au tirant (19) ;
- la longueur dudit élément de liaison (84) est assez grande pour que l'organe de dépose (8) vient au moins dans le proche voisinage du sol (S) lorsque seul l'élément d'arrêt (23) est lié au tirant (19).

15. Faucheuse selon l'une quelconque des revendications 1 à 14, ***caractérisée en ce* que** l'élément d'arrêt (23) est une broche (24).

## Patentansprüche

1. Mähmaschine, die:
- einen sich in Arbeitsstellung quer zur Arbeitsvorschubrichtung (12) erstreckenden Schneidmechanismus (6);
- eine Kupplungskonstruktion (4) zur Verbindung mit der Kupplungsvorrichtung (2) eines Motorfahrzeugs (3);
- einen Stützträger (5), der einerseits mittels eines ersten Gelenks (11) an der Kupplungskonstruktion (4) und andererseits mittels eines zweiten Gelenks (13) am Schneidmechanismus (6) angelenkt ist;
- eine Entlastungsvorrichtung (7), die
• ein elastisches Element (14) zur Entlastung des Schneidmechanismus (6) in Arbeitsstellung, und
• eine Steuervorrichtung (18) mit
* einem Körper (20), der mittels eines Gelenks (21) mit der Kupplungskonstruktion (4) verbunden ist;
* einer Zugstange (19), die einerseits mit einem der Enden des elastischen Elements (14) verbunden ist und andererseits in dem Körper gleitet;
* einem Halteelement (23) zur Begrenzung des Gleitens der Zugstange (19) bezüglich des Körpers (20) in mindestens einer Richtung;
enthält;
- ein Absetzelement (8) zur Verbindung - in Absetzstellung - mit dem Stützträger (5) mittels des Halteelements (23), umfaßt;
***dadurch gekennzeichnet,*** daß das Absetzelement (8) in Arbeitsstellung mittels des Halteelements (23) mit der Zugstange (19) verbunden ist.

2. Mähmaschine nach Anspruch 1, ***dadurch gekennzeichnet,*** daß das Absetzelement (8) in Arbeitsstellung sowie in Absetzstellung mittels einer Verbindung (53) gleichermaßen mit dem Stützträger (5) verbunden ist.

3. Mähmaschine nach Anspruch 2, ***dadurch gekennzeichnet,*** daß der Stützträger (5) im Hinblick auf die Verbindung (53) eine Aufnahme (54) enthält, durch die sich das Absetzelement (8) erstreckt.

4. Mähmaschine nach Anspruch 3, ***dadurch gekennzeichnet,*** daß es sich bei der Aufnahme (54) des Stützträgers (5) um eine Öffnung (55) handelt, in der das Absetzelement (8) gleiten kann, um aus der Arbeitsstellung in die Absetzstellung oder umgekehrt gebracht zu werden.

5. Mähmaschine nach Anspruch 4, ***dadurch gekennzeichnet,*** daß in der Nähe jedes Endes (61, 62) des Absetzelements (8) ein Anschlag (63, 64) vorgesehen ist, der das Gleiten des Absetzelements (8) in der Öffnung (55) begrenzen soll.

6. Mähmaschine nach irgend einem der Ansprüche 1 bis 5, ***dadurch gekennzeichnet,*** daß das Absetzelement (8) in Arbeitsstellung mittels des Halteelements (23) an der Zugstange (19) der Steuervorrichtung (18) aufgehängt ist.

7. Mähmaschine nach irgend einem der Ansprüche 1 bis 6, ***dadurch gekennzeichnet,*** daß
- sich das Absetzelement (8) in Arbeitsstellung zum großen Teil über dem Stützträger (5) erstreckt;
und
- sich das Absetzelement (8) in Absetzstellung zum großen Teil unter dem Stützträger (5) erstreckt.

8. Mähmaschine nach irgend einem der Ansprüche 1 bis 7, ***dadurch gekennzeichnet,*** daß sich das Halteelement (23) in Arbeitsstellung einerseits durch eine im oberen Teil (27) des Absetzelements (8) Vorgesehene erste Aufnahme (25) und andererseits durch eine in der Zugstange (19) vorgesehene zweite Aufnahme (28) erstreckt.

9. Mähmaschine nach Anspruch 8, ***dadurch gekennzeichnet,*** daß eine Verriegelungsvorrichtung (29) vorgesehen ist, die das Heraustreten des Halteelements (23) aus der in der Zugstange (19) vorgesehenen zweiten Aufnahme (28) verhindert, wenn sich die Mähmaschine in Arbeitsstellung befindet.

10. Mähmaschine nach Anspruch 9, ***dadurch gekennzeichnet,*** daß die Verriegelungsvorrichtung (29) das Halteelement (23) und den oberen Teil (27) des Absetzelements (8) umfaßt.

11. Mähmaschine nach irgend einem der Ansprüche 1 bis 10, ***dadurch gekennzeichnet,*** daß es zum Lösen des Absetzelements (8) von der Zugstange (19) erforderlich ist, gleichzeitig auf das Absetzelement (8) und auf das Halteelement (23) einzuwirken.

12. Mähmaschine nach irgend einem der Ansprüche 1 bis 11, ***dadurch gekennzeichnet,*** daß sich das Halteelement (23) in Absetzstellung einerseits durch eine im mittleren Teil (75) des Absetzelements (8) vorgesehene dritte Aufnahme (78) und andererseits durch eine im Stützträger (5) vorgesehene vierte Aufnahme (79) erstreckt.

13. Mähmaschine nach irgend einem der Ansprüche 1 bis 12, ***dadurch gekennzeichnet,*** daß das Halteelement (23) mittels eines Verbindungselements (84) mit dem Absetzelement (8) verbunden ist.

14. Mähmaschine nach Anspruch 13, ***dadurch gekennzeichnet,*** daß das Verbindungselement (84) eine so festgelegte Länge aufweist, daß
- die Länge des Verbindungselements (84) derart klein ist, daß es die Anordnung des Absetzelements (8) in Absetzstellung nicht gestattet, wenn nur das Halteelement (23) mit der Zugstange (19) verbunden ist;
- die Länge des Verbindungselements (84) derart groß ist, daß das Absetzelement (8) zumindest in unmittelbare Nähe des Bodens (S) gelangt, wenn nur das Halteelement (23) mit der Zugstange (19) verbunden ist.

15. Mähmaschine nach irgend einem der Ansprüche 1 bis 14, ***dadurch gekennzeichnet,*** daß das Halteelement (23) ein Stift (24) ist.

## Claims

1. Mower which includes:
- a cutting mechanism (6) extending, in the work position, transversely to the direction of travel during work (12);
- a hitch structure (4) intended to be connected to the hitch device (2) of a motor vehicle (3);
- a carrying beam (5) articulated on the one hand to the hitch structure (4) by means of a first articulation (11) and on the other hand to the cutting mechanism (6) by means of a second articulation (13);
- a lightening device (7) which includes:
• an elastic element (14) intended to lighten the cutting mechanism (6) in the work position, and
• a control device (18) which includes:
* a body (20) connected to the hitch structure (4) by means of an articulation (21);
* a tie rod (19) connected on the one hand to one of the ends of said elastic element (14) and sliding on the other hand in said body;
* a stop element (23) intended to limit, at least in one direction, the sliding of the tie rod (19) with respect to the body (20);
- a set-down member (8) intended, in the set-down position, to be connected to the carrying beam (5) by means of said stop element (23);
***characterized in* that**, in the work position, the set-down member (8) is connected to the tie rod (19) by means of said stop element (23).

2. Mower according to Claim 1, ***characterized in* that** both in the work position and in the set-down position, the set-down member (8) is also connected to the carrying beam (5) by means of a link (53).

3. Mower according to Claim 2, ***characterized in* that** the carrying beam (5) includes, for said link (53), a housing (54) through which said set-down member (8) extends.

4. Mower according to Claim 3, ***characterized in* that** the housing (54) of the carrying beam (5) is an orifice (55) in which the set-down member (8) can slide in order to be brought from the work position into the set-down position or vice versa.

5. Mower according to Claim 4, ***characterized in* that** there is provided, close to each end (61, 62) of the set-down member (8), a stop (63, 64) intended to limit the sliding of the set-down member (8) in the orifice (55).

6. Mower according to any one of Claims 1 to 5, ***characterized in* that**, in the work position, the set-down member (8) is suspended to the tie rod (19) of the control device (18) by means of the stop element (23).

7. Mower according to any one of Claims 1 to 6, ***characterized in* that**:
- in the work position, the set-down member (8) extends for the most part above the carrying beam (5);
and
- in the set-down position, the set-down member (8) extends for the most part below the carrying beam (5).

8. Mower according to any one of Claims 1 to 7, ***characterized in* that**, in the work position, the stop element (23) extends on the one hand through a first housing (25) provided in the upper part (27) of the set-down member (8) and on the other hand through a second housing (28) provided in the tie rod (19).

9. Mower according to Claim 8, ***characterized in* that** there is provided a locking device (29) preventing the stop element (23) from coming out of the second housing (28) provided in the tie rod (19) when the mower is in the work position.

10. Mower according to Claim 9, ***characterized in* that** the locking device (29) involves the stop element (23) and the upper part (27) of the set-down member (8).

11. Mower according to any one of Claims 1 to 10, ***characterized in* that** in order to disconnect the set-down member (8) from the tie rod (19) it is necessary to act simultaneously on said set-down member (8) and on the stop element (23).

12. Mower according to any one of Claims 1 to 11, ***characterized in* that**, in the set-down position, the stop element (23) extends on the one hand through a third housing (78) provided in the middle part (75) of the set-down member (8) and on the other hand through a fourth housing (79) provided in the carrying beam (5).

13. Mower according to any one of Claims 1 to 12, ***characterized in* that** the stop member (23) is connected to the set-down member (8) by means of a linking element (84).

14. Mower according to Claim 13, ***characterized in* that** the linking element (84) is of a length determined so that:
- the length of said linking element (84) is short enough not to allow the set-down member (8) to be placed in the set-down position when just the stop element (23) is connected to the tie rod (19);
- the length of said linking element (84) is long enough for the set-down member (8) to come at least into close proximity with the ground (S) when just the stop element (23) is connected to the tie rod (19).

15. Mower according to any one of Claims 1 to 14, ***characterized in* that** the stop element (23) is a pin (24).
